# EUROPÄISCHE PATENTSCHRIFT

(11) **EP 1 745 542 B1**
(45) Veröffentlichungstag und Bekanntmachung des Hinweises auf die Patenterteilung: **06.10.2010**
(21) Anmeldenummer: 05739856.2
(22) Anmeldetag: 28.04.2005
(51) Int. Cl.: H02M 5/451

(54) **VERFAHREN ZUR ANSTEUERUNG EINES UMRICHTERS, INSBESONDERE ZUR ERZEUGUNG VON WIRKLEISTUNG FÜR DIE INDUKTIVE ERWÄRMUNG**
METHOD FOR CONTROL OF A FREQUENCY CONVERTER IN PARTICULAR FOR GENERATION OF EFFECTIVE POWER FOR INDUCTIVE HEATING
PROCEDE POUR COMMANDER UN CONVERTISSEUR, NOTAMMENT POUR GENERER UNE PUISSANCE ACTIVE DESTINEE AU CHAUFFAGE PAR INDUCTION

(30) Priorität: 29.04.2004 DE 102004021217
(43) Veröffentlichungstag der Anmeldung: 24.01.2007
(73) Patentinhaber: Ema Indutec GmbH, 74909 Meckesheim (DE)
(72) Erfinder: LEISTER, Michael, 69250 Schönau (DE)
(74) Vertreter: Sommer, Peter
(86) Internationale Anmeldenummer: PCT/EP2005/051949
(87) Internationale Veröffentlichungsnummer: WO 2005/107050

(56) Entgegenhaltungen:
- EP-A- 0 450 744
- EP-A- 1 341 401
- DE-A1- 19 817 305
- US-A- 6 154 375
- US-A- 6 154 377
- US-A- 6 163 019
- US-A1- 2003 048 643
- US-B1- 6 316 755
- US-B1- 6 529 354
- JAIN P ET AL: "A near zero current switching series resonant inverter using GTOs" CONFERENCE PROCEEDINGS ARTICLE, 6. November 1989 (1989-11-06), Seiten 33-41, XP010091196
- MU-PING CHEN ET AL: "The surge analysis of induction heating power supply with PLL" POWER ELECTRONICS AND DRIVE SYSTEMS, 1999. PEDS '99. PROCEEDINGS OF THE IEEE 1999 INTERNATIONAL CONFERENCE ON HONG KONG 27-29 JULY 1999, PISCATAWAY, NJ, USA,IEEE, US, Bd. 1, 27. Juli 1999 (1999-07-27), Seiten 303-308, XP010352120 ISBN: 0-7803-5769-8
- FISCHER G ET AL: "Operation modes of series inverter 400 kHz for induction heating" CONFERENCE PROCEEDINGS ARTICLE, 1993, Seiten 322-327, XP006511457
- OKUNO A ET AL: "FEASIBLE DEVELOPMENT OF SOFT-SWITCHED SIT INVERTER WITH LOAD- ADAPTIVE FREQUENCY-TRACKING CONTROL SCHEME FOR INDUCTION HEATING" IEEE TRANSACTIONS ON INDUSTRY APPLICATIONS, IEEE INC. NEW YORK, US, Bd. 34, Nr. 4, Juli 1998 (1998-07), Seiten 713-718, XP000848009 ISSN: 0093-9994

## Beschreibung

### Technisches Gebiet

Die vorliegende Erfindung betrifft ein Verfahren zur Ansteuerung eines Umrichters, insbesondere zur Erzeugung von Wirkleistung für die induktive Erwärmung.

Zur Härtung von elektrisch leitfähigem Material wird dieses häufig mittels eines magnetischen Wechselfeldes induktiv erwärmt. Dabei wird die Erwärmung des Materials durch Verluste bewirkt, die durch Wirbelströme hervorgerufen werden und die das magnetische Wechselfeld in dem Material erzeugt. Die Verwendung eines hochfrequenten Wechselfeldes führt zu einer Erwärmung der Oberfläche des zu härtenden Materials, während niederfrequente Wechselfelder eine höhere Eindringtiefe besitzen. In Abhängigkeit vom Anwendungsfall besteht die Notwendigkeit, die verwendete Frequenz des magnetischen Wechselfeldes anzupassen.

### Stand der Technik

Es sind vielfältige Vorrichtungen für Umrichter bekannt. Die Umrichter umfassen Wechselrichter, die eine Eingangsspannung in eine Ausgangswechselspannung mit einer gewünschten Frequenz umwandeln. Umrichter zur Erzeugung von Wirkleistung für die induktive Erwärmung erzeugen das Wechselfeld durch einen Wechselstrom in einem Induktor. Die am Werkstück benötigten wesentlichen Eigenschaften des Wechselfeldes sind seine Frequenz, die Amplitude des Wechselstromes sowie die zur Verfügung stehende Wirkleistung.

Eine Grundfunktion von Wechselrichtern ist das Schalten von induktiven und ohmschen Lasten. Grundsätzlich besteht beim Schalten induktiver Lasten das Problem, dass die Induktivität den Strom weiter treibt, obwohl die Spannung sich bereits geändert hat. Elektronische Schalter, beispielsweise Bipolartransistoren, Thyristoren, GTOs, MCTs, MOSFETs oder IGBTs, können den Strom jedoch nicht in umgekehrte Richtung treiben, so dass zu ihnen Freilaufdioden antiparallel geschaltet werden, die den Kommutierungsstrom führen. Die Zeit, in der die Freilaufdioden den Kommutierungsstrom führen, ist die Freilaufphase. Die entstehenden Verluste sind Durchlass- und Schaltverluste, die mit dem Strom und der Betriebsfrequenz steigen, zur Erwärmung der Bauteile führen und die mögliche Betriebsfrequenz begrenzen.

Die Schaltfrequenz elektronischer Schalter ist außerdem durch Ein- und Ausschaltverzögerungszeiten, Mindestein- und -ausschaltzeiten und Umladezeiten bzw. Rückstromzeiten durch die Freilaufdioden begrenzt. Zur Wirkleistung an der Last tragen im Wesentlichen die Grundschwingungen von Strom und Spannung bei. Daher werden zur Erzeugung von Wirkleistung i. d. R. Verfahren verwendet, bei denen der Gehalt an Oberschwingungen sowie die Phasenverschiebung von Strom und Spannung an der Last minimiert sind. Ein bekanntes Verfahren zur Steuerung von Umrichtern für die induktive Erwärmung ist das Schwenkverfahren, das insbesondere in Wechselrichtern mit H-Brückenschaltung der elektronischen Schalter den Vorteil hat, dass es die gleichzeitige Steuerung der Ausgangsleistung und der Ausgangsfrequenz ermöglicht. Das Schwenkverfahren regelt die Betriebsfrequenz im Lastkreis starr lastgeführt mit dem Ziel der optimalen Kompensation des Lastkreises. Maßgeblich für die maximal erreichbare Betriebsfrequenz sind die zulässigen Schaltüberspannungen und Abschaltströme beim Ausschalten und die zulässigen Spitzenströme beim Einschalten der elektronischen Schalter, da diese zu hohen im Wechselrichter auftretenden Schaltverlusten führen. Sie bestimmen ebenfalls die Dimensionierung der Bauteile.

Die Optimierung der Betriebsfrequenz und damit des Arbeitspunktes bei solchen Umrichtern wird in Abhängigkeit von der Last durchgeführt. Im Betrieb ändert sich die Last, insbesondere beim induktiven Erwärmen durch das Zu- und Abführen und der zwischenzeitlich einhergehenden Materialeigenschaftsänderungen des zu behandelnden Werkstücks. Ein solches Verfahren, das ohne nähere Analyse als ein frequenzvariables Verfahren erscheint, kann als starr lastgeführtes Verfahren bezeichnet werden.

Aus der DE 41 34 461 A1 ist ein Schweißumrichter, der zur ohmschen Erwärmung an Stelle von induktiver Erwärmung genutzt wird, bekannt, der auf der Sekundärseite des Trenntransformators an Hand der Stromverläufe zur Last hin, ihrem zeitlichen Verhalten, der Steilheit und der Höhe Fehlbetriebe wie Erdschlüsse oder Stromwertüberschreitungen detektieren kann.

Hierdurch soll sichergestellt werden, dass der Schweißumrichter nicht außerhalb seiner Nenndaten be-trieben wird. EP 0 450 744 A2 offenbart ein Verfahren und eine vorrichtung zur Leistungssteuerung für die induktive Erwärmung.

Weiterhin ist aus der DE 101 06 245 A1 bekannt, dass bei einem Umrichter mit Serienresonanzkreis durch eine Pulsweitenmodulation leistungsgesteuert mittels einer Frequenzwahl des "Zerhackens", also durch ein Zünden der Transistoren, der durch einen Rinnenofen fließende Strom sinusförmig modellierbar ist. Wird bei der Ansteuerung ein so genanntes "Aufzipfeln" des Stromverlaufs beobachtet, so kann mittels schnellerer Impulsbreitensteuerung, die in der Regel bei der zehnfachen Frequenz des Stromes liegen soll, dem Phänomen des "Aufzipfelns" entgegengewirkt werden. Mit anderen Worten, die Stromspitzen sollen sich durch eine überfrequente Pulsweitenmodulation beseitigen lassen, die dargestellte Betriebsweise führt durch eine Variation einer Pulsweitenmodulation bei einem Serienresonanzkreis zu einem sinusförmigen Stromverlauf.

Jeder Umrichter besitzt Nenndaten wie beispielsweise Netzanschlusswerte, Nennleistung, Nennfrequenz und Nenn-Ausgangsspannung, wobei die Nenn-Ausgangsspannung üblicherweise auch die Maximal-Ausgangsspannung darstellt. Dies gilt auch für die Leistung. Niedrigere Werte für die Ausgangsspannung und für die Leistung sind problemlos möglich (bis zu ca. 1 - 10% des Nennwertes) und werden auch benötigt. Die Netzspannung liegt innerhalb genormter Grenzen um den Nennwert herum. Die Betriebsfrequenz ist dagegen aufgrund von internen, frequenzabhängig hergestellten Bauteilen nur in genau festgelegten Bereichen um die Nennfrequenz herum variierbar, wobei die Bauteile, wenn sie für große Frequenzbereiche hergestellt werden, auch erhebliche Kosten verursachen. Ein Beispiel solcher Bauteile sind die Schwingkreiskondensatoren. Diese werden üblicherweise für die Nennfrequenz hergestellt, und erlauben einen Betrieb bis zu ca. 1,2 x Fₙₑₙₙ. Obwohl es keine untere Frequenzgrenze gibt, würde der Lastkreis für niedrige Frequenzen erheblich größere Kapazitäten benötigen und die verwendeten Kondensatoren wären daher teuer. Die Ausrüstung des Umrichters mit Schwingkreiskondensatoren ist daher immer ein Kompromiss zwischen den Kosten und der Anwendungsbreite. Bei Anschluss der Nennlast am Ausgang des Umrichters, die sich aus der Nennleistung und der Nennspannung ergibt, wird der Umrichter mit seinen Nennwerten betrieben, beispielsweise mit Nennfrequenz. Dieser Betrieb des Umrichters heißt Nennbetrieb. Die tatsächliche Last ist aber durch den Induktor und das Werkstück bestimmt und entspricht daher i. d. R. nicht der Nennlast. Trotz der Fehlanpassung ober- oder unterhalb der Nennlast muss im Wesentlichen Nennleistung am Ausgang des Umrichters abgegeben werden. Daher werden Umrichter i. d. R. so ausgelegt, dass sie bis ca. 80% Ausgangsspannung Nennleistung abgeben. Ebenso sollte ein Umrichter bei leicht schwankendem Netz oder innerhalb einer festgelegten Frequenzbreite Nennleistung abgeben können. Diese Flexibilität ist mit hohen Mehrkosten verbunden. Die jeweiligen tatsächlichen Betriebswerte des Umrichters weichen teilweise erheblich von den Nennwerten ab. So ist es zum Beispiel ohne weiteres üblich, einen Umrichter mit einer Nennleistung von 100kW zeitweise nur mit einer tatsächlichen Leistung von ca. 20kW zu betreiben.

Aufgabe der Erfindung ist, ein Verfahren zum Betreiben eines Umrichters, insbesondere für die Erzeugung von Wirkleistung für die induktive Erwärmung, das höhere und tiefere Betriebsfrequenzen bei gleichzeitig kostengünstigem Bauteilaufwand sowie kostengünstiger Herstellung und höheren Leistungen einfach ermöglicht.

### Darstellung der Erfindung

Gelöst wird die Aufgabe mit einem erfindungsgemäßen Verfahren gem. der Ansprüche 1 und 14 zum Betreiben eines Umrichters, insbesondere zur Erzeugung von Wirkleistung für die induktive Erwärmung, wobei an dem Umrichter ein Lastschwingkreis vorgesehen ist. Ein geeigneter Umrichter zur Lösung der erfindungsgemäßen Aufgabe ist aus Anspruch 8 entnehmbar. Vorteilhafte Weiterbildungen des Erfindung sind in den unteransprüchen definiert.

Nach einem Aspekt der Erfindung wird der Arbeitspunkt des Umrichters in Abhängigkeit von der Änderung der Resonanzfrequenz des Lastschwingkreises und mindestens einer weiteren Einflussgröße vorausberechnet. Die Einflussgröße kann vorteilhaft der Istwert der Ausgangsspannung am Lastkreis sein. Durch die Berechnung des Arbeitspunktes des Umrichters in Abhängigkeit von der Änderung der Resonanzfrequenz des Lastschwingkreises wird dem Anwender die Frequenzbestimmung des Lastkreises ermöglicht. Die Vorausberechnung des Arbeitspunktes des Umrichters in Abhängigkeit von mindestens einer weiteren Einflussgröße ermöglicht eine dynamische und optimale Anpassung des Arbeitspunktes in Abhängigkeit von der weiteren Einflussgröße. Der Fachmann weiß, dass die Einflussgrößen je nach Anwendung und Betriebszustand verschieden sind. Vorteilhaft wird der Arbeitspunkt des Umrichters so gewählt, dass er unterresonant, also mit einer niedrigeren Frequenz als der Resonanzfrequenz des Lastkreises, betrieben wird.

Nach einem anderen Aspekt der Erfindung wird das Verfahren zum Betreiben eines Umrichters so betrieben oder durchgeführt, dass der Wechselrichter mit einer niedrigeren Frequenz als der Resonanzfrequenz des Lastschwingkreises, der als unterresonanten Frequenz bezeichneten Frequenz, betrieben wird. Dieser Zustand wird aber erst im eingeregelten Zustand erreicht. Der eingeregelte Zustand ist der Zustand, wenn bei keiner Resonanzfrequenzveränderung des Lastkreises (einem idealisierten, selten erreichbaren Zustand) die endgültige Schaltfrequenz erreicht ist. Dieser Zustand wird im Folgenden auch als Betriebspunkt oder Arbeitspunkt bezeichnet. Die Ausgangsfrequenz, insbesondere die Ausgangsspannungsfrequenz, am Lastkreis ist direkt oder indirekt durch Umrechenschritte messbar. Der Umrichter umfasst einen Wechselrichter, mit wenigstens zwei Schaltern, die im Wechsel eingeschaltet werden. Im Arbeitspunkt wird eine Umrichterbelastung durch eine unterresonante Schaltfrequenz der Schalter in Übereinstimmung mit einer vorausberechneten Schaltfrequenz unter Berücksichtigung der Ausgangsfrequenz am Lastschwingkreis reduziert. Ein Vorteil in der Frequenzwahl liegt in der geringeren Lastkreiskapazität, die notwendig ist.

Bevorzugt ist die Betriebsfrequenz des Wechselrichters im Wesentlichen kleiner als die Resonanzfrequenz des Lastschwingkreises. In Abhängigkeit vom Arbeitspunkt wird eine gezielt um einen errechneten Betrag reduzierte Betriebsfrequenz zur Ansteuerung des Wechselrichters verwendet, die jederzeit zu den Arbeitspunktveränderungen angepasst wird. Die nötigen Veränderungen liegen etwa im einstelligen Prozentbereich der Nennfrequenz. Die Einstellung der Betriebsfrequenz unterhalb der Resonanzfrequenz des Lastschwingkreises ruft eine Verschiebung der Phase zwischen Strom und Spannung im Lastschwingkreis und eine Veränderung ihrer Kurvenform hervor. Dadurch erfolgt die Blindleistungskompensation im Lastkreis nicht vollständig. Die Einstellung der Betriebsfrequenz bewirkt aber andererseits eine vorteilhafte Verringerung der Strombelastung der Bauteile des Umrichters, insbesondere der Bauteile des Wechselrichters, so dass der Bauteilaufwand, insbesondere auch der notwendige Aufwand an Kühlung der Bauteile, geringer ist, die Bauteile kleiner ausgelegt werden können und daher Kosten für die Bauteile eingespart werden können. Beispielsweise kann die Auslegung der Kapazität eines Kondensators bei Verwendung eines Parallelschwingkreises als Lastkreis bei einer um ca. 10% geringeren Betriebsfrequenz um ca. 20% geringer gewählt werden. Der Blindanteil des Stromes im Wechselrichter kann in Abhängigkeit vom Arbeitspunkt auf ca. 10%, das ist in wirtschaftlicher Hinsicht eine optimale Einstellung, reduziert werden. Auch die Lebensdauer der Bauteile erhöht sich durch die geringere Strombelastung. Weitere Vorteile ergeben sich aus der übrigen Beschreibung.

Ein Umrichter, auf dem das erfindungsgemäße Verfahren nach einem der zuvor dargestellten Aspekte betrieben werden kann, der insbesondere zur Erzeugung von Wirkleistung für die induktive Erwärmung dient, umfasst einen Lastschwingkreis und einen Wechselrichter, wobei der Wechselrichter mindestens zwei im Wechsel eingeschaltete Schalter aufweist.

Weiterhin bietet eine Ausführungsform eines geeigneten Umrichters einen ersten Speicher für den Zeitpunkt des Schaltens des ersten Schalters und einen zweiten Speicher für den Zeitpunkt des Schaltens des zweiten Schalters. Speicher sind hierbei so zu verstehen, dass in dem Umrichter digitale Speicherzellen vorhanden sein können, aus denen die Werte für den Umrichter zur Verfügung gestellt werden. Speicher im Sinne der Erfindung können aber auch analoge Schaltkreise sein, die in der Lage sind, verarbeitbare Schaltwerte oder Schaltzeitpunkte zur Verfügung zu stellen. Hierbei ist der konkrete interne Aufbau in dem Umrichter nachrangig, vorrangig werden die Schaltzeitpunkte der Schalter betrachtet, die zum Beispiel mittels Oszilloskop auch extern messbar sind. In einem dritten Speicher wird ein Wert für eine Zwischenzeit, insbesondere für die Zeitmitte zwischen dem im ersten und dem im zweiten Speicher abgelegten Zeitpunkt vorgesehen. Weiterhin ist ein Nulldurchgangskomparator für die Feststellung des Nulldurchgangs der Ausgangsspannung vorgesehen. Der Nulldurchgang ist der Wert, zu dem ein Referenzwert durchschritten wird. Der Referenzwert liegt zwischen einem positiven Scheitelwert und einem negativen Scheitelwert. In der Regel korrespondiert der Nulldurchgang mit dem Spannungswert 0 V. Weiterhin ist ein Vergleicher für den im dritten Speicher abgelegten berechneten Zwischenwert, etwa die Zeitmitte einerseits und den Zeitpunkt des tatsächlich gemessenen Nulldurchgangs andererseits vorgesehen, wobei der Umrichter bei einer Abweichung zwischen dem berechneten Zwischenwert und dem tatsächlich gemessenen Nulldurchgang durch eine schrittweise synchrone Anpassung der Schaltzeitpunkte des ersten und zweiten Schalters eine Belastungsverringerung, insbesondere eine Blindleistungsverringerung, des Umrichters einleitet. Synchron bedeutet hierbei, dass die Schaltzeitpunkte und damit die Schaltfrequenz für den ersten und für den zweiten Schalter gleichartig verkürzt oder verzögert bzw. verlängert werden.

Aus der Schaltfrequenz des Einschaltens der Schalter und dem Tastverhältnis, der Gegenüberstellung des Einschaltzeitpunkts und des Ausschaltzeitpunkts, der auch als Austastwinkel bezeichnet werden kann, oder auch der Schaltfrequenz des Ausschaltens der Schalter und dem Tastverhältnis lässt sich das Schaltverhalten des Umrichters ausreichend bestimmen. Zur Reduktion von Speicherwerten, die vorausberechnet werden, müssen nicht alle Werte, wie Einschaltwert, Ausschaltwert und Tastverhältnis berechnet werden. Das erfindungsgemäße Verfahren kann sich die Schaltfrequenz wahlweise aus der Häufigkeit des Einschaltens oder der Häufigkeit des Ausschaltens der wechselweise geschalteten Schalter berechnen. Durch die Entkopplung der Schaltfrequenz und des Tastverhältnisses kann der Umrichter auf jede Resonanzfrequenz des Lastkreises hin eingestellt werden, so dass im Wesentlichen die Energiemengen bereitgestellt werden, die der Lastkreis aufnehmen soll.

Nach einer bevorzugten Ausführungsform arbeitet der Umrichter am Anfang des Anfahrens eines neuen Arbeitspunktes so, dass zunächst von einer zweiten Schaltfrequenz gestartet wird. Die zweite Schaltfrequenz, die oberhalb der unterresonanten Schaltfrequenz im Arbeitspunkt liegt, vorzugsweise sogar eine überresonante Schaltfrequenz ist, wird schrittweise auf die unterresonante Schaltfrequenz des Arbeitspunktes angenähert. Die Approximation wird in einzelnen Schritten durchgeführt, bei denen die Schrittweite und die Frequenzänderung, auch dem Vorzeichen nach, angepasst werden. Bei einzelnen Schritten kann auch eine Verschlechterung der Gesamtbelastung für den Umrichter eintreten, die durch die nächsten Schritte wieder ausgeglichen oder sogar verbessert wird. Hierdurch kann sehr schnell durch geringe Unsicherheit der optimale Arbeitspunkt ermittelt werden.

Insgesamt stellt die vorausberechnete Schaltfrequenz einen Ausgleich zwischen mehreren Umrichterbelastungen ein. Sie wird ermittelt, indem insbesondere aus ohmschen Verlusten des Umrichters, aus Schaltverlusten, vorzugsweise in den Schaltern des Wechselrichters, und einem Blindleistungsanteil, der der Wirkleistung des Umrichters zuordenbar ist, eine Gesamtberechnung des Arbeitspunktes der geringsten Belastung errechnet oder vorausberechnet wird.

Das Tastverhältnis kann auch als Austastwinkel bezeichnet werden, der sich aus der Differenz zwischen Ausschaltzeitpunkt abzüglich Einschaltzeitpunkt in Relation zur Schaltfrequenz ergibt. Das Tastverhältnis beim Starten von der zweiten Schaltfrequenz ist geringer, als beim Erreichen der Schaltfrequenz des Arbeitspunktes. Hierdurch wird kontrolliert mit dem Zurverfügungstellen der Energiemenge an den Lastkreis umgegangen.

Im eingeregelten Zustand befindet sich die aus den Schaltzeitpunkten bestimmte Schaltfrequenz in einer zur Resonanzfrequenz des Lastkreises unterresonanten Frequenz. Gestartet werden kann jedoch von einer überresonanten Frequenz. Nach einem vorteilhaften Ausführungsbeispiel kann der im zweiten Speicher enthaltene Zeitpunkt des Abschaltens des zweiten Schalters aus einer Berechnung des jeweils letzten, insbesondere alle Schalter umfassenden, Schaltvorgangs festgelegt werden. Nach jedem Schaltdurchlauf wird somit die Schaltfrequenz optimiert. Die Anpassung kann folglich sehr schnell geschehen.

Nach einem anderen, ebenfalls vorteilhaften Ausführungsbeispiel kann statt der Berücksichtigung der Ausschaltpunkte auch der im ersten Speicher enthaltene Zeitpunkt des Einschaltens des ersten Schalters aus einer Berechnung des jeweils letzten, insbesondere alle Schalter umfassenden, Schaltvorgangs bestimmt sein. Prinzipiell stehen für die Berechnung sowohl die Ausschaltzeitpunkte als auch die Einschaltzeitpunkte zur Verfügung. Der Umrichter kann je nach Ausführungsform dann jeweils an die zuvor durchgeführten Ausschalt- oder Einschaltvorgänge angepasst ausgestaltet werden.

Im Lastschwingkreis ist eine Resonanzdrossel vorgesehen, die in einer vorteilhaften Ausgestaltung in Parallelschaltung mit einem Glättungskondensator, insbesondere ein Widerstandskapazitätsglied, verschaltet ist. Die Resonanzdrossel treibt den Strom in den Lastkreis. Hochfrequente Schwingungen werden durch den Glättungskondensator geglättet und ggf. durch den Widerstand des Widerstandskapazitätsgliedes gedämpft.

Jeder Schalter, der insbesondere ein Halbleiterschalter wie ein IGBT, ein GTO oder ein Leistungs-MOSFET ist, kann mit einer antiparallelen Freilaufdiode gegen Stromumkehr geschützt sein.

In einer bevorzugten Ausführungsform umfasst der Umrichter einen Spannungszwischenkreis, so dass die am Wechselrichter anliegende Gleichspannung im Wesentlichen zeitlich konstant ist. Der Spannungszwischenkreis ermöglicht die Verwendung eines kostengünstigen ungesteuerten Gleichrichters zur Gleichrichtung der Netzspannung. Der Fachmann versteht, dass der Spannungszwischenkreis im einfachsten Fall aus einem Kondensator gebildet ist. Die Kapazität des Kondensators ist aus Kosten- und Platzgründen begrenzt. Der Fachmann versteht ebenfalls, dass der Spannungszwischenkreis häufig eine zusätzliche Glättungsdrossel beinhaltet zur Glättung des Stromes.

In einer weiteren bevorzugten Ausführungsform umfasst der Umrichter eine Resonanzdrossel. Die Resonanzdrossel legt zusammen mit den Schaltverlusten maßgeblich sowohl wirtschaftlich als auch absolut die Frequenzgrenzen des Umrichters fest, da sie frequenzspezifisch bzgl. der Betriebsfrequenz des Umrichters ist. In dem erfindungsgemäßen Verfahren liegen die Frequenzgrenzen bei etwa 0,5 x Fₙₑₙₙ als untere Grenze und etwa 1,25 x Fₙₑₙₙ als obere Grenze. Bei niedrigen Betriebsfrequenzen werden große Resonanzdrosseln benötigt, die teuer und daher ggf. unwirtschaftlich sind, bei hohen Betriebsfrequenzen sind die Schaltverluste in dem Wechselrichter ungünstig. Außerdem sind Resonanzdrosseln für hohe Ströme nur aufwendig herzustellen. Die Resonanzdrossel begrenzt unter anderem die Stromanstiegsgeschwindigkeit am Ausgang des Wechselrichters.

In einer bevorzugten Ausführungsform sind weitere Einflussgrößen die Höhe der Zwischenkreisspannung und/oder die Höhe der Netzspannung und/oder die Soll- und/oder Istwerte der Ausgangsspannung und/oder.-stroms und/oder -leistung und/oder die Güte des Lastkreises. Durch Erfassen einer oder mehrerer weiterer Einflussgrößen wird mittels dem erfindungsgemäßen Verfahren sowohl auf Veränderungen im Lastschwingkreis, die beispielsweise durch Änderung der Materialeigenschaften der Last bei induktiver Erwärmung hervorgerufen werden, als auch auf Veränderungen im Umrichter, die beispielsweise durch Änderungen der Netzspannung hervorgerufen werden, flexibel adaptiv reagiert, so dass der Arbeitspunkt des Umrichters optimiert wird.

Vorzugsweise umfasst der Umrichter einen Wechselrichter und der Arbeitspunkt des Umrichters wird im Wesentlichen durch die Veränderung der Betriebsfrequenz des Wechselrichters geregelt, wobei die Betriebsfrequenz des Wechselrichters vorausberechnet wird. Durch die Vorausberechnung der Betriebsfrequenz erfolgt die Regelung adaptiv, quasi lastgeführt. Dabei ist die Betriebsfrequenz des Wechselrichters im Wesentlichen die Frequenz des Lastschwingkreises.

Die Höhe der Netzspannung hat einen erheblichen Einfluss auf die Höhe der Ströme und die Verluste. So ist bei 10% Überspannung und starrer Regelung der entstehende interne Effektivstrom um ca. 7% höher, so dass die Bauteile für diesen Betriebsfall ausgelegt werden müssen, was die Kosten für die Herstellung des Umrichters erhöht. Die quasilastgeführte Regelung kann die Stromerhöhung durch eine Frequenzverschiebung im Wesentlichen ausgleichen, so dass kostengünstigere Bauteile verwendet werden können.

In einer, bevorzugten Ausführungsform wird die Ausgangsleistung und/oder die Ausgangsspannung des Umrichters im Wesentlichen durch die Veränderung des Tastverhältnisses des Wechselrichters geregelt, wobei das Tastverhältnis des Wechselrichters vorausberechnet wird. Der Fachmann weiß, dass das Tastverhältnis des Wechselrichters das Verhältnis der Einschaltzeit zur Periodendauer, bzw. der Einschaltdauer zur Gesamtzeit, der elektronischen Schalter des Wechselrichters bezogen auf die Betriebsfrequenz ist. Das Tastverhältnis legt fest, zu welcher Zeit Strom durch die Leistungsschalter fließt. Da nur bei Stromfluss Leistung übertragen wird, legt das Tastverhältnis auch die für die Leistungsübertragung zur Verfügung stehende Zeit fest. Bei konstantem Strom bewirkt ein kleines Tastverhältnis eine kleine Ausgangsleistung, während ein großes Tastverhältnis eine große Ausgangsleistung bewirkt. Daher ist ein großes Tastverhältnis vorteilhaft, da sonst zur Übertragung der gleichen Leistung ein höherer Strom benötigt wird.

Bevorzugt ist zur Regelung des Umrichters eine digitale Steuerungselektronik vorgesehen. Das erfindungsgemäße Verfahren ermöglicht durch die digitale Steuerungselektronik eine sehr flexible, schnelle, zuverlässig und effektive Anpassung der Beziehungen zwischen den Stromwerten von Spitzenstrom, Effektivstrom, Wirkstromanteil, Blindstromanteil und Abschaltstrom zueinander und der Stromkurvenformen des Umrichters. Bei hohen Betriebsfrequenzen, insbesondere bei Betriebsfrequenzen > 10 kHz wird der Abschaltstrom gezielt verringert, um die Schaltverluste zu minimieren. Bei niedrigen Betriebsfrequenzen wird der Effektivstrom verringert, um die Strombelastung der Bauteile zu reduzieren. Durch Verbesserung des Verhältnisses von Spitzen- zu Effektivstrom können die Bauteile für den Wechselrichter und die Resonanzdrossel kostengünstiger dimensioniert werden. Es sind Resonanzdrosseln mit kleineren Induktivitäten und kleineren Spitzenströmen einsetzbar.

Bevorzugt wird der Wechselrichter mittels Pulsbreiten-Steuerung geschaltet. Durch die Pulsbreiten-Steuerung können die Ausgangsgrößen Spannungshöhe oder Leistung mittels Veränderung des Tastverhältnisses eingestellt werden.

Vorzugsweise weist der Wechselrichter eine H-Brücke auf, wobei die H-Brücke vier elektronische Schalter umfasst, wobei die in der Brückendiagonale angeordneten elektronischen Schalter immer gleichzeitig eingeschaltet werden, wobei die im gleichen Brückenzweig angeordneten elektronischen Schalter immer im Wechsel eingeschaltet werden und wobei immer zwei elektronische Schalter eingeschaltet oder alle elektronischen Schalter ausgeschaltet sind. Beim gleichzeitigen Einschalten der in der Brückendiagonale angeordneten elektronischen Schalter wird Leistung in den Lastkreis übertragen. Beim gleichzeitigen Ausschalten der in der Brückendiagonale angeordneten elektronischen Schalter fließt Energie durch die Freilaufdioden in den Spannungszwischenkreis zurück (Energierücklieferung). Die notwendige Spannung, um den Strom gegen die Zwischenkreisspannung in den Spannungszwischenkreis zurück zu treiben, liefert eine Resonanzdrossel. Durch die direkte Verbindung der Resonanzdrossel über die Freilaufdioden an die Zwischenkreisspannung wird der Strom sehr schnell gezwungen, auf Null zu sinken. Allein durch diese direkte Verbindung wird die Strombelastung im Wechselrichter wesentlich vermindert. Das Verfahren ist einfach und kostengünstig durchführbar.

Elektronische Schalter im Sinne der Erfindung sind insbesondere Bipolartransistoren, Thyristoren, GTOs, MCTs, MOSFETs oder IGBTs. Der Fachmann versteht, dass alle elektronischen Schalter einsetzbar sind, die eine ausreichende Spannungs- und Strombelastbarkeit in den gewünschten Arbeitsbereichen aufweisen. Der Fachmann versteht weiterhin, dass die Schaltverluste größer werden, je häufiger die elektronischen Schalter geschaltet werden und dass mit steigender Häufigkeit des Schaltens die Lebensdauer der Schalter verringert wird.

In einer bevorzugten Ausführungsform sind die elektronischen Schalter IGBTs, da IGBTs robust sind, sich durch kurze Schaltzeiten auszeichnen, einen geringen Spannungsabfall im leitenden Zustand aufweisen und eine hohe Stromtragfähigkeit besitzen, so dass sie auch bei großen Spannungs- oder Stromspitzen weniger häufig zerstört werden.

In einer bevorzugten Ausführungsform ist der Lastschwingkreis ein Parallelschwingkreis, da der Wechselrichter dadurch nicht einen hohen Schwingstrom führen muss. Vorteilhafterweise können daher ein Ausgangstrafo und Ausgangsleitungen verwendet werden, deren mögliche Strombelastung geringer dimensioniert ist und die daher kostengünstiger sind, als bei Verwendung eines Reihenschwingkreises. Der Fachmann versteht, dass der Einsatz eines Reihenschwingkreises ebenfalls möglich ist.

In einer bevorzugten Ausführungsform weist der Umrichter einen Transformator auf, der es erlaubt als Ausgangsspannung eine vom Wechselrichterausgang unabhängige Spannung zu erreichen. Außerdem ist die galvanische Trennung eine in vielen Anwendungen zu erfüllende Vorschrift zur Erhöhung der Sicherheit.

Bei einem mit dem erfindungsgemäßen Verfahren betriebenen Umrichter sind die Verluste im Umrichter auch außerhalb seines Nennbetriebes erheblich reduziert und einstellbar. Das erfindungsgemäße Verfahren zeichnet sich dadurch aus, dass es die Betriebsweise des Umrichters optimiert, also seinen Arbeitspunkt und daher die Strombelastung seiner Bauteile, insbesondere der Bauteile des Wechselrichters. Dies wird im Wesentlichen durch die Änderung der Betriebsfrequenz des Umrichters ermöglicht. Dadurch kann der Umrichter erheblich kostengünstiger hergestellt werden. Gleichzeitig ermöglicht das Verfahren die Einstellung von Ausgangsleistung und/oder -spannung des Umrichters entsprechend den vom Nutzer gewünschten Werten im Wesentlichen durch Änderung des Tastverhältnisses des Wechselrichters.

Ein erfindungsgemäßer Umrichter, der nach einem erfindungsgemäßen Verfahren betrieben wird, startet nach einer Ausführungsform bei einer zunächst unbekannten Resonanzfrequenz des Lastkreises von zum Beispiel 10 kHz mit einer zweiten Schaltfrequenz, die zum Beispiel 12 kHz oder auch 15 kHz betragen kann. Idealerweise wird bei ungefährer Schwingkreisresonanzfrequenz gestartet. Ungefähr bedeutet in diesem Zusammenhang, dass zum Beispiel eine Abweichung von 50 % der tatsächlich erwarteten Betriebsfrequenz als Startwert für die Schaltfrequenz erwünscht ist, vorzugsweise nur 25%.

Das Tastverhältnis der Spannungsfreischaltung von dem Spannungszwischenkreis des Umrichters auf den Lastschwingkreis beträgt anfänglich zum Beispiel nur 3 %. Es werden sehr kleine Energiepakete in den Lastschwingkreis gegeben. Innerhalb von zum Beispiel nur 2 ms erkennt der Umrichter, insbesondere durch den Vergleich zwischen berechneter Zwischenzeit und tatsächlich gemessenem Nulldurchgang der Ausgangsspannung am Lastschwingkreis, dass er den Lastschwingkreis überresonant betreibt. Er erniedrigt schrittweise, z. B. mit einer Schrittweite von 1 kHz startend, die Schaltfrequenz, bis er in den unterresonanten Frequenzbereich gelangt. Hierbei kann das Tastverhältnis nach einer Ausführungsform schon während dieser Schritte erhöht werden.

Nach einer anderen Ausführungsform wird das Tastverhältnis erst bei minimalen Abweichungen von dem Arbeitspunkt, zum Beispiel weniger als 50 %, angehoben. Nach weiteren Verringerungen der Schaltfrequenzen wird dann nach mehreren Millisekunden eine Schaltfrequenz erreicht, die mehr als 10 % von der Resonanzfrequenz unterresonant abweicht. In einem nächsten Schritt wird die Schaltfrequenz wieder angehoben. Vorzugsweise wird dabei die Schrittweite weiter verringert. Ein versuchsweise aufgebauter erfindungsgemäßer Umrichter ist mit dem vorgestellten Verfahren in der Lage, innerhalb von 20 ms die Betriebsfrequenz von 9 kHz bei einer Resonanzfrequenz des Lastschwingkreises von 10 kHz zu erreichen. Durch das Verfahren wird auf einen optimalen Arbeitspunkt in Hinblick auf Lastschwingkreis und Umrichter insgesamt abgestellt und nicht mehr nur ausschließlich der Lastschwingkreis betrachtet.

Vergleich eines starr lastgeführt geregelten Umrichters mit einem erfindungsgemäß geregelten Umrichter: Bei einem starr lastgeführten Umrichter, der beispielsweise mittels Schwenkverfahren betrieben wird, ist die Betriebsfrequenz des Umrichters nur durch den Lastkreis bestimmt. Bei einer Änderung der Frequenz des Lastkreises wird die Betriebsfrequenz des Umrichters so geregelt, dass der Lastkreis fast genau bei Resonanzfrequenz betrieben wird. Eine starr lastgeführte Steuerung ist auf die maximale Wirkleistungsabgabe am Werkstück gerichtet. Im Gegensatz dazu wird ein erfindungsgemäß betriebener Umrichter adaptiv und quasi-lastgeführt betrieben, so dass die in den realen Arbeitspunkten entstehenden Verluste im Umrichter optimiert, das heißt möglichst gering im Verhältnis zu den Herstellungs- und Betriebskosten des Umrichters sind.

Durch das erfindungsgemäße Verfahren ergeben sich im Vergleich zu einem starr lastgeführten Verfahren, beispielsweise zum Schwenkverfahren, folgende Vorteile:

| | |
|---|---|
| Resonanzdrossel: | Das Volumen (proportional zu Preis und Platzbedarf) verringert sich um 65%. |
| Wechselrichter-Brücke: | Die Verlustleistung (proportional zu IGBT-Größe und -Preis) verrin-gert sich im Mittel um ca. 45%. |
| Ausgangstransformator: | Die Baugröße in kVA (und damit der Preis) verringert sich um ca. 39%. |
| Kompensationsfeld: | Die benötigten Kapazitäten (und damit Größe, Platz und Preis) verringern sich um ca. 30%. |
| Strombelastung: | Die Strombelastung, auch von Kabeln, Anschlüssen und Schienen, verringert sich um ca. 27% im Mittel. |
| Zwischenkreis: | Im Zwischenkreis können bis zu 30% an Kondensatoren eingespart werden. |
| Frequenzbereich: | Der nutzbare Frequenzbereich des Umrichters in allen Leistungsklassen verbessert sich auf mindestens 0,5 x Fₙₑₙₙ -1,25 x Fₙₑₙₙ. Wirtschaftlich vergrößert sich auch der absolute Frequenzbereich auf unter 3 kHz und über 20 kHz. |

### Kurzbeschreibung der Zeichnung

Im Folgenden wird die Erfindung anhand von Figuren beschrieben. Die Beschreibungen sind lediglich beispielhaft und schränken den allgemeinen Erfindungsgedanken nicht ein.
- Fig. 1: zeigt eine Ausführungsform eines Umrichters, der mit dem erfindungsgemäßen Verfahren arbeitet.
- Fig. 2-6: zeigen verschiedene Ausgangsströme des Wechsel- richters in verschiedenen Arbeitspunkten und für verschiedene Ausgangsspannungen.
- Fig. 7: verdeutlicht die Energierücklieferung bei perio- dischem Schalten eines elektronischen Schalters.
- Fig. 8: zeigt einen erfindungsgemäßen Umrichter mit Last- schwingkreis in vereinfachter Darstellung gegen- über Figur 1, der eine Resonanzdrosselbedämpfung mittels R/C-Glied hat.
- Fig. 9: hilft beim Verständnis der durch die Figuren 2 - 6 gemessenen Wiedergaben der Stromverläufe durch Herleitung der Zusammenhänge an der Resonanzdros- sel.

### Ausführungsbeispiel der Erfindung

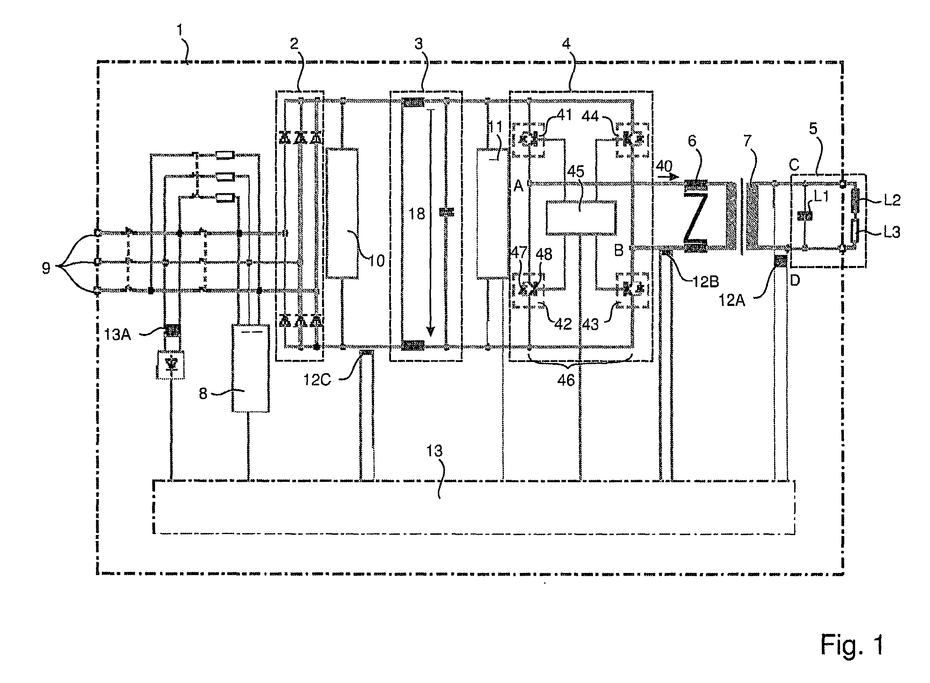

In **Fig. 1** ist eine Ausführungsform eines Umrichters 1 dargestellt, die mit dem erfindungsgemäßen Verfahren arbeitet. Eine Netzspannung 9 wird in einem Gleichrichter 2 gleichgerichtet und dann in einem Wechselrichter 4 in eine Wechselspannung einer anderen Frequenz und Form gewandelt. Der Umrichter umfasst einen Spannungszwischenkreis 3 bestehend aus einem Kondensator und einer Drossel, wobei über dem Kondensator eine Zwischenkreisspannung 18 abfällt. Weiterhin umfasst der Umrichter 1 eine Resonanzdrossel 6 zur Formung der Ausgangsspannung des Wechselrichters 4, die i. d. R. eine nicht stromkompensierte Drossel ist, und einen Transformator 7, insbesondere einen Übertrager, zur galvanischen Entkopplung des Lastkreises 5. Der Lastkreis ist ein Parallelschwingkreis, bestehend aus einem Kompensationskondensator L₁, einem Induktor L₂ und einem Wirkwiderstand L₃. Der Wechselrichter 4 ist als H-Brücke 46 geschaltet und weist in jedem Brückenzweig eine Parallelschaltung 41-44 aus einem elektronischen Schalter 48, hier einem IGBT, und einer Freilaufdiode 47 auf. Der Umrichter 1 umfasst eine Steuerungselektronik 13, die bevorzugt einen Mikroprozessor umfasst und die den Umrichter 1 regelt. In der Steuerungselektronik 13 sind Speicher vorgesehen, in denen die Ein- und Abschaltzeitpunkte der Schalter 48 in den Parallelschaltungen 41-44 anpassbar hinterlegt sind. An Hand der Werte in den Speichern wird die Schaltfrequenz fₛ bestimmt, die sich aus den Einschaltzeiten 63 pro Periodendauer 62 ergeben. Aus der Schaltfrequenz ergibt sich die Häufigkeit des Einschaltens. Weiterhin ergibt sich aus der Schaltfrequenz fₛ und der Ausschaltfrequenz der Schalter 48 die Betriebsfrequenz. In der Steuerungselektronik 13 sind wenigstens drei Speicher vorgesehen, ein erster Speicher 68, ein zweiter Speicher 69 und ein dritter Speicher 70 (nicht näher in der Steuerungselektronik 13 der **Fig. 1** graphisch dargestellt). Die Istwerte der Spannungen und Ströme werden mittels Messwandler 12A, 12B, 12C erfasst, die je nach gemessenem Parameter Strom- oder Spannungsmesswandler sein können, die direkt oder galvanisch entkoppelt angebunden sind. Beispielhaft sei auf den galvanisch getrennten Spannungswandler 12A verwiesen, der den Ausgangsspannungsverlauf des Lastkreises an die Eingänge der Steuerungselektronik 13 weiterleitet, den Stromwandler 12B, der den Strom durch die Resonanzdrossel an die Eingänge der Steuerungselektronik 13 weiterleitet, den Stromwandler 12C, der Strom im Spannungszwischenkreis 3 an die Eingänge der Steuerungselektronik 13 weiterleitet.

Über den Spannungswandler 13A und den Gleichrichter wird ein Teil der eingangsseitigen Versorgungsspannung zu Versorgung der Steuerungselektronik 13 genutzt. Die Steuerungselektronik 13 berücksichtigt die Eingangsspannungseinflüsse und passt zum Beispiel den Austastwinkel an. Die Ein- und Ausschaltzeiten der IGBTs 48 des Wechselrichters 4 werden mittels der digitalen Steuerungselektronik 13 über ein Gate Drive 45 geregelt. Die Regelung bzw. Messung der Zwischenkreisspannung 18 mittels der digitalen Steuerungselektronik 13 erfolgt über einen Spannungswandler 11. Außerdem führt die Steuerungselektronik 13 eine Drehstromüberwachung 8 durch. Die Drehstomüberwachung 8 überprüft unter anderem die tatsächliche Höhe bzw. den Scheitelwert der Versorgungsspannung, die in Abhängigkeit vom Standort des Umrichters 1 variieren kann. Genauso kann die Drehstromüberwachung 8 auch die Frequenztreue der Versorgungsspannung oder deren Güte bestimmen. Auf Grund der Schwankungen in der Netzspannung 9 und auf Grund der unterschiedlichen Güten der Netzspannung 9 je nach Standort des Umrichters 1 kann eine eingangsseitig nicht näher berücksichtigte Spannungsüberhöhung zu einer zusätzlichen Belastung für den Umrichter 1 führen. Des Weiteren befindet sich zwischen dem Gleichrichter 2 und dem Spannungszwischenkreis 3 eine Schutzbeschaltung 10.

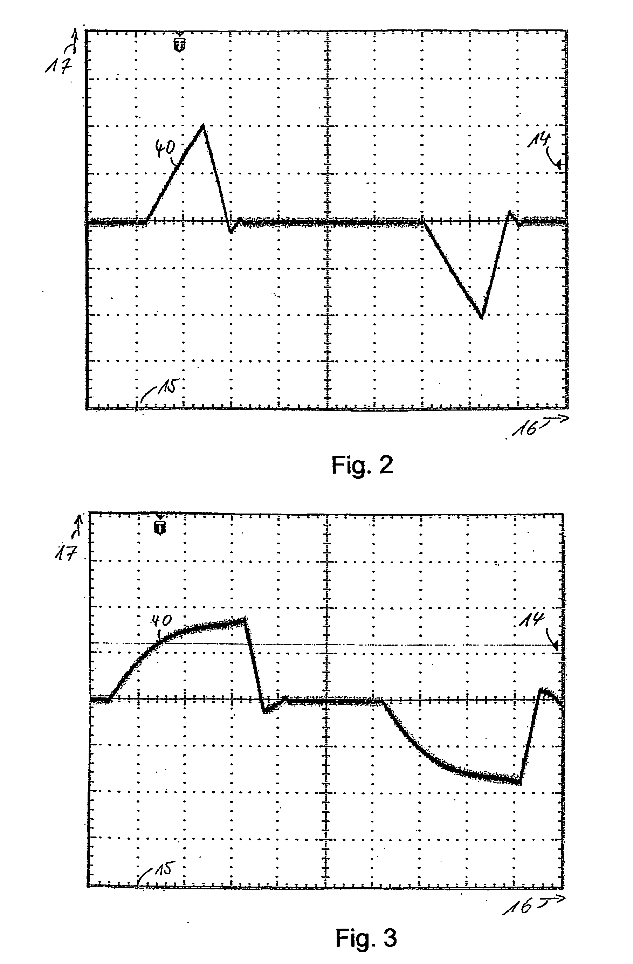

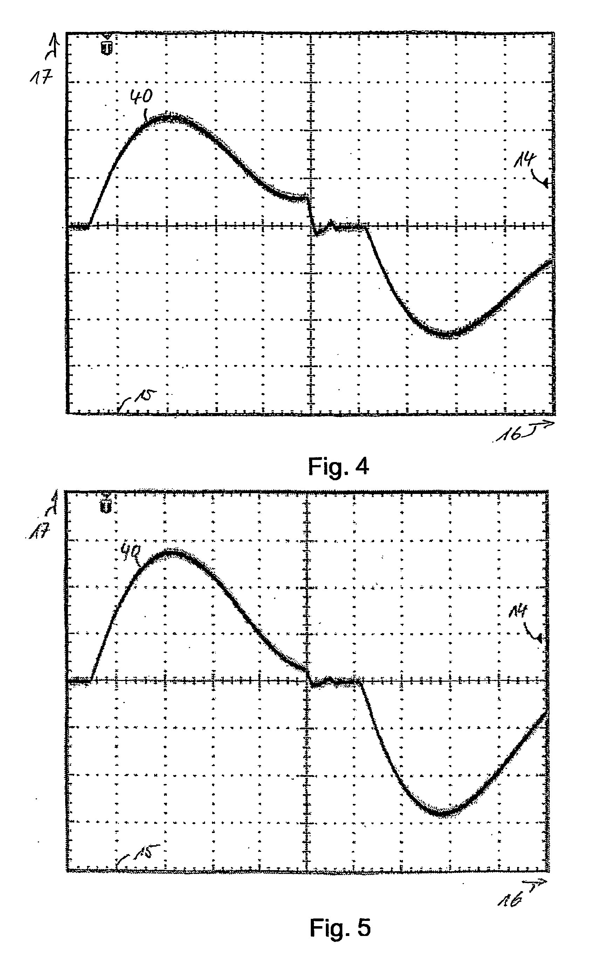

Die **Fig. 2-6** zeigen verschiedene Ausgangsstromverläufe 40 des Wechselrichters 4 in verschiedenen Arbeitspunkten und für verschiedene Ausgangsspannungen des Wechselrichters 4. Auf der x-Achse 16 ist die Zeit in µs aufgetragen. Pro Quader 15 ist eine Zeit von 4 ps vergangen. Auf der y-Achse 17 ist der Betrag des Ausgangsstroms 40 aufgetragen. Der rechte Pfeil 14 zeigt den Strombetrag zum Triggerzeitpunkt an. Es ist der Strom 40, der in der Resonanzdrossel 6 fließt. In allen Diagrammen ist insbesondere der Punkt eines Extremums im Stromverlauf interessant, zu dem also die erste Ableitung 0 ist. Das ist der Punkt, zu dem keine Änderung der Spannung über die Resonanzdrossel 6 vorliegt. Zu diesen Zeitpunkten ist die Spannung vor der Resonanzdrossel 6 und nach der Resonanzdrossel 6, am Lastkreis 5, gleich hoch. **Fig. 2** zeigt den Ausgangsstromverlauf bei normalem Arbeitspunkt bei ca. 20% Ausgangsspannung. Zum Triggerzeitpunkt ist der Betrag des Stromes 118 A. **Fig. 3** zeigt den Ausgangsstromverlauf bei normalem Arbeitspunkt bei ca.50% Ausgangsspannung. Zum Triggerzeitpunkt ist der Betrag des Stromes 118 A. **Fig. 4** zeigt den Ausgangsstromverlauf bei leicht hochohmigem Betrieb bei 100 % Ausgangsspannung und einer mittleren Betriebsfrequenz. Zum Triggerzeitpunkt ist der Betrag des Stromes 90 A. **Fig. 5** zeigt den Ausgangsstromverlauf im gleichen Arbeitspunkt wie **Fig. 4****,** jedoch nun für Hochfrequenzanwendung. Der Ausschaltstrom ist nahezu Null. Zum Triggerzeitpunkt ist der Betrag des Stromes 90 A. Zu den **Fig. 4** und **5** interessant anzumerken ist, dass am Ende des einzelnen Strompakets, in der Darstellung in der Nähe des Koordinatenursprungs, immer noch ein Strom fließt, der dann durch das Abschalten auf Null, mit entsprechenden kurzzeitigen Überschwingern, gefahren wird. Beim erfindungsgemäße Verfahren wird zum Abschaltzeitpunkt auch der durch die Drossel fließende Strom abgeschaltet, während beim Schwenkverfahren weiterhin Strom durch die Drossel fließt.

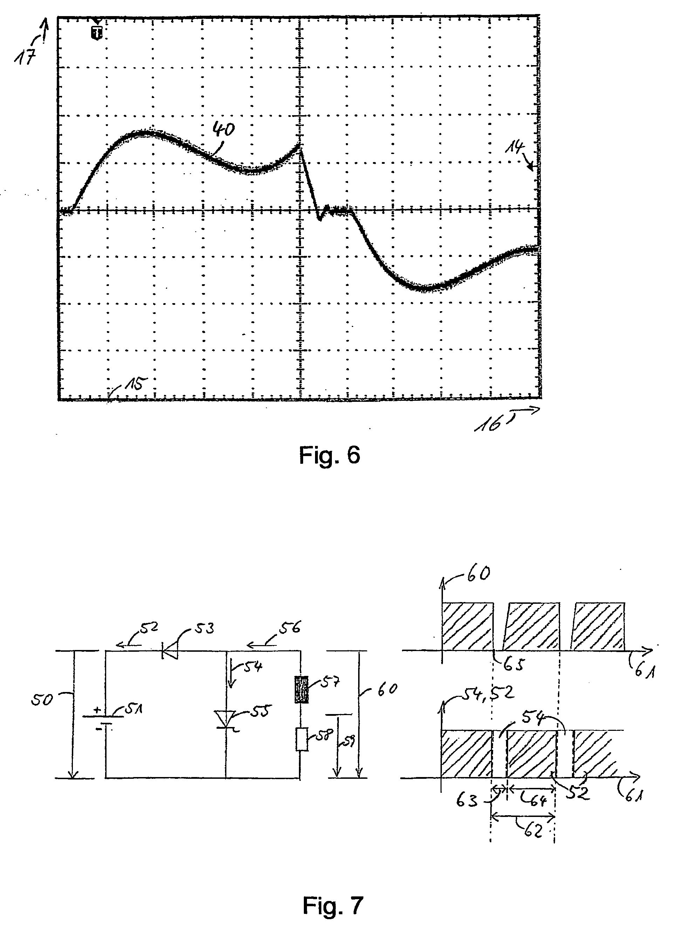

Die **Fig. 4, 5** sind für eine Resonanzfrequenz im Bereich von mehr als 20 kHz aufgezeichnet worden. Bei diesen für Umrichterschalter hohen Frequenzen dürfen die Schaltverluste, hervorgerufen durch die Frequenz, nicht vernachlässigt werden. Daher wird ein Umrichter bei dieser Frequenz vorteilhaft belastungsarm betrieben, wenn in die Vorausberechnung der Schaltfrequenz auch ein Anteil für die Schaltverluste über die Schalter eingeht. **Fig. 6** zeigt den Ausgangsstromverlauf ebenfalls in dem Arbeitspunkt der **Fig. 4** und **5**, jedoch für Niedrigfrequenzanwendung. Der Abschaltstrom ist hoch, jedoch sind die Effektiv- und Maximalströme niedriger. Zum Triggerzeitpunkt ist der Betrag des Stromes 90 A. So oder ähnlich sieht eine Stromkurve aus, die mit einer Resonanzfrequenz von ca. 1 kHz arbeiten soll.
**Fig. 7** verdeutlicht die Energierücklieferung bei periodischem Schalten eines elektronischen Schalters 55.Der elektronische Schalter 55 wird an einer Gleichspannungsquelle 51 betrieben, zu der er parallel geschaltet ist. Parallel zum elektronischen Schalter 55 sind eine Resonanzdrossel 57 und eine Last 58 in Reihe geschaltet. Über der Gleichspannungsquelle 51 fällt eine Eingangsspannung 50 ab, über den elektronischen Schalter 55 sowie die Reihenschaltung der Resonanzdrossel 57 und Last 58 fällt die Ausgangsspannung 60 ab. Oberhalb der Last 58 fällt eine Lastspannung 59 ab.
Wird der elektronische Schalter 55 eingeschaltet, das findet im Zündzeitpunkt 65 statt, steigt der Ausgangsstrom 56 an und die Resonanzdrossel 57 speichert (magnetische) Energie. Wird der elektronische Schalter 55 ausgeschaltet,
fließt der Ausgangsstrom 56 als Diodenstrom 52 über die Freilaufdiode 53 auch gegen die Gleichspannungsquelle 51 zurück. Die notwendige Spannung liefert die Resonanzdrossel 57. Wird der elektronische Schalter 55 wieder eingeschaltet, fließt der Strom als Schalterstrom 54 über den elektronischen Schalter 55 und die Freilaufdiode 53 verhindert das Kurzschließen der Gleichspannungsquelle 51. Die Diagramme zeigen den Verlauf der Ausgangsspannung 60 sowie des Diodenstroms 52 und des Schalterstroms 54. In der Einschaltzeit 63 des elektronischen Schalters 55 fließt der Schalterstrom 54, während in der Ausschaltzeit 64 der Diodenstrom 52 fließt. Die Summe der Ein- 63 und Ausschaltzeit 64A des elektronischen Schalters 55 ist die Periodendauer 62. Die im Ersatzschaltbild dargestellten Verläufe des Schalterstroms 54 und der Ausgangsspannung 60 zeigen die Rückspeicherung der gespeicherten Energie, wenn alle Schalter des Wechselrichters 4 nach **Fig. 1** ausgeschaltet sind.

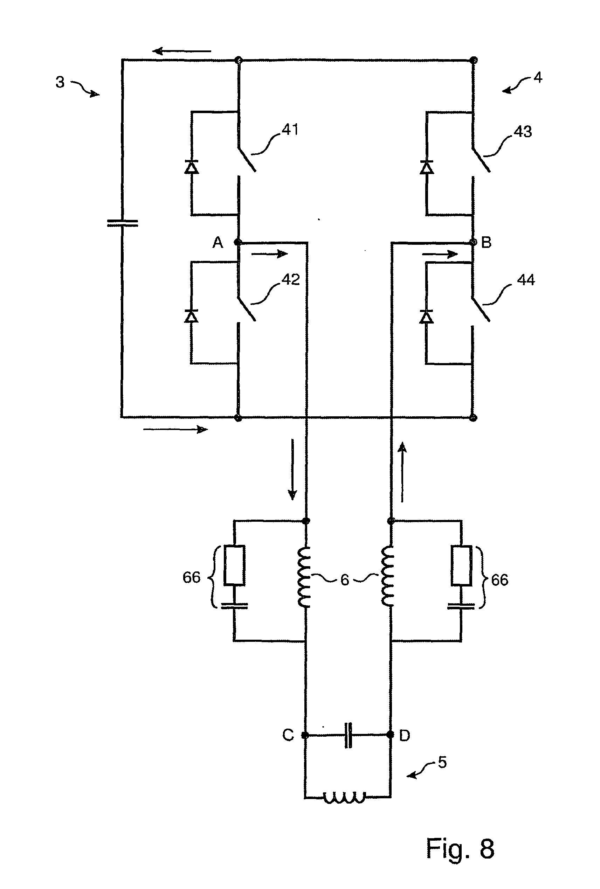

**Fig. 8** zeigt eine weitere Ausführungsform eines erfindungsgemäßen Wechselrichters 4, der an einem Spannungszwischenkreis 3 und einem Lastkreis 5 angeschlossen ist. Die galvanische Entkopplung über den Transformator 7 aus **Fig. 1** ist entfallen. Der Lastkreis 5, an dessen beiden Punkten C, D die Ausgangsspannung des Lastkreises 5 messbar ist, wird über die Resonanzdrossel 6 mit Strom, der durch Pfeile parallel zu den Leitungen angedeutet ist, versorgt. Je nach Schalterstellung der Schalter 41, 42, 43, 44 fließt der Strom von dem Punkt A über die Resonanzdrossel 6 und den Lastkreis 5 in den Punkt B des Wechselrichters 4. Entgegen der Ausführung nach **Fig. 1** zeigt die Ausgangsseite des Umrichters noch auf jeder Drosselseite ein R/C-Glied 66, das den Spannungsverlauf aus der Resonanzdrossel 6 dämpft. Es ist für den Fachmann offensichtlich, dass an Stelle einer geteilten Resonanzdrossel 6 auch nur eine einzige Drossel verwendet werden kann. Wesentlich ist hierbei Induktivität der Resonanzdrossel. Auch sind Kombinationen von Umrichtern aus **Fig. 1** und **Fig. 8** vorstellbar. Das R/C-Glied 66 über der Resonanzdrossel wirkt als Schwingungsdämpfer für die in der Resonanzdrossel gespeicherte und nach dem Abschalten (siehe auch Figur 7) durch Aufladen des Kondensators im Spannungszwischenkreis zurückgelieferte Energie.

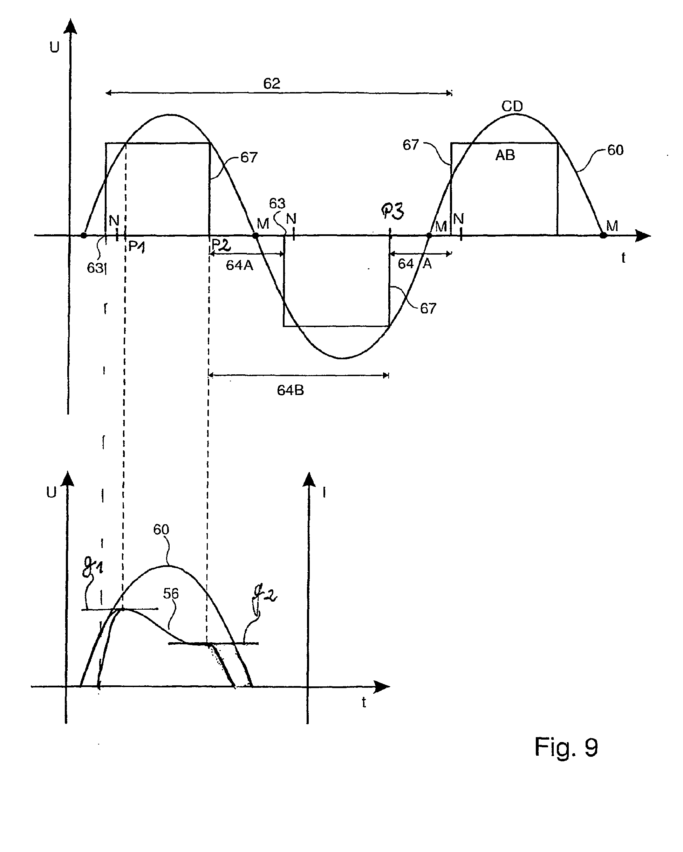

In **Fig. 9** wird dargelegt, wie mit Kenntnis der Resonanzdrossel 6, der Resonanzfrequenz des Lastkreises 5 und einer gewählten Periodendauer 62, gewählten Einschaltzeiten 63 und daraus sich ergebenden Ausschaltzeitdauern 64A der Strom durch die Resonanzdrossel 6 der **Fig. 1** oder **Fig. 8** konstruktiv darstellbar ist. Weiterhin ist in **Fig. 9** die Verschiebung des Arbeitspunktes im Lastkreis weg von der Resonanzfrequenz beschrieben. Das Ausgangsdiagramm, das obere der beiden Zeitdiagramme, zeigt den Spannungsverlauf, gemessen zwischen den Punkten AB und zwischen den Punkten CD am Umrichter 1, wie beispielhaft schematisch dargestellt in **Fig. 1** oder **Fig. 8**. Der Spannungsverlauf CD an dem Lastkreis 5 ist idealisiert als Sinusverlauf ohne jegliche Harmonische dargestellt. Er hat eine Frequenz, die im Bereich der Periodendauer 62 liegt, und wird durch die Aufschaltung von Spannungsblöcken 67 angeregt, die aus dem Spannungszwischenkreis 3 über den Schaltern 41, 42, 43, 44 zwischen den Stellen AB, den Stellen zwischen Schaltern und Resonanzdrosseln 6, anliegen.

Das Tastverhältnis in dem Diagramm ist der Quotient der gesamten Periodendauer 62 abzüglich der beiden Ausschaltzeitdauern 64A über der Periodendauer 62.

Der Ausschaltzeitpunkt P3, dargestellt an dem negativen Spannungsblock 67, ergibt sich ausgehend von dem ersten Ausschaltzeitpunkt P2 des positiven Spannungsblocks 67, der in der **Fig. 9** durch P2 markiert ist. Somit lässt sich auf der Grundlage des vorhergehenden Ausschaltzeitpunkts P2 der jeweils nachfolgende Ausschaltzeitpunkt P3 anhand der vorgegebenen Ausschaltzeitdauer 64B berechnen.

Der Spannungsverlauf CD erreicht pro Periode zweimal den Nulldurchgang M. Nicht vollständig synchron zu den Nulldurchgängen M der Ausgangsspannung CD, sondern nacheilend zu den Nulldurchgängen M, werden wenigstens zwei Schalter 41, 42, 43, 44 des Wechselrichters 4 an den Einschaltzeiten 63 eingeschaltet, damit entweder ein positiver oder negativer Spannungsblock von der Zwischenkreisspannung stammend, vorzugsweise wechselweise, aber mit gleicher Lage wie die Ausgangsspannung, Anregungsenergie an den Lastkreis geben kann.

In dem Spannungsdiagramm ist ein Zwischenwert, hier etwa die Zeitmitte der Ausschaltzeitdauer 64B, als errechneter Nulldurchgang N zwischen den Spannungsblöcken 67 eingezeichnet, der außerhalb, vorzugsweise unterresonant, damit auch untersynchron, zu den tatsächlichen Nulldurchgängen M der Ausgangsspannung CD liegt. Dieser Zwischenwert für den errechneten Nulldurchgang N ist aus der Ausschaltzeitdauer 64B zwischen dem in einem ersten Speicher abgelegten ersten Ausschaltzeitpunkt P2 und dem in einem zweiten Speicher abgelegten zweiten Ausschaltzeitpunkt P3 berechnet und in einem dritten Speicher abgelegt.

Nach Vergleich des berechneten Nulldurchgangs N mit dem tatsächlichen Nulldurchgang M mittels eines Vergleichers erfolgt bei Feststellung einer nicht planmäßigen Abweichung eine Anpassung der Schaltzeitpunkte P2, P3 des ersten und zweiten Schalters 41,42,43,44. Dadurch ist es möglich, eine erwünschte Belastungsverringerung des Umrichters herbeizuführen.

In dem unteren Teil der **Fig. 9** ist die Halbwelle der sinusförmigen Ausgangsspannung 60 nochmals dargestellt, zusammen mit dem Stromverlauf 56 durch die Resonanzdrossel 6, ablesbar an der rechten y-Achse. Zu den Zeitpunkten P1, P2, an denen die Ausgangsspannung 60 und die Spannung an den Stellen AB den gleichen Wert haben, findet keine Stromflussänderung durch die Resonanzdrossel 6 statt, hervorgehoben durch waagerechte Geraden g1, g2 an den lokalen Extrema der Stromflusskurve 56.

Die gewählten Frequenzen und Schaltpunkte sorgen für ein vollständiges Abklingen des Stroms 56 vom Zeitpunkt P2 des Abschaltens an. Zu den anderen, in den **Figuren 2** bis **6** dargestellten Stromverläufen 56 gelangt man durch Auswahl anderer Frequenzen.

Jedem Fachmann ist verständlich, dass die beschriebenen Ausführungsbeispiele nur einzelne Gestaltungsmöglichkeiten aus den zahlreichen Möglichkeiten erfindungsgemäßer Lösungen darstellen, deren anspruchsgemäßer Schutzbereich auch dann nicht verlassen wird, wenn z. B. die Steuerungselektronik 13 diskret oder analog aufgebaut worden ist, an Stelle eines Schalters 41, 42, 43, 44 jeweils mehrere Schalter parallel verwendet werden, statt von einer überresonanten Frequenz von einer unterresonanten Frequenz startend die Betriebsfrequenz gesucht wird oder auch die Schalter 41, 42, 43, 44 des Wechselrichters 4 in einer anderen Reihenfolge als in den Ausführungsbeispielen beschrieben bei gleichzeitigem Erreichen der erfindungsgemäßen Vorteile betrieben werden.

### Bezugszeichenliste

- 1: Umrichter
- 2: Gleichrichter
- 3: Spannungszwischenkreis
- 4: Wechselrichter
- 5: Lastkreis
- 6: Resonanzdrossel
- 7: Transformator
- 8: Drehstromüberwachung
- 9: Netzspannung
- 10: Schutzbeschaltung
- 11: Spannungswandler
- 12A, 12B, 12C: Messwandler, vorzugsweise Spannungs- und Strommesswandler
- 13: Steuerungselektronik
- 13A: Spannungswandler als Spannungsversorgung zur Versorgung
- der: Steuerungselektronik 13
- 14: Pfeil
- 15: Quader
- 16: x-Achse
- 17: y-Achse
- 18: Zwischenkreisspannung
- 40: Ausgangsstrom des Wechselrichters
- 41-44: Schalter
- 45: Gate Drive
- 46: H-Brücke
- 47: Freilaufdiode
- 48: elektronischer Schalter
- 50: Eingangsspannung Uₑ
- 51: Gleichspannungsquelle
- 52: Diodenstrom I_{d}
- 53: Freilaufdiode
- 54: Schalterstrom Iₛ
- 55: löschbarer elektronischer Schalter
- 56: Ausgangsstrom Iₐ
- 57: Resonanzdrossel
- 58: Last
- 59: Lastspannung U_{I}
- 60: Ausgangsspannung Uₐ
- 61: Zeit t
- 62: Periodendauer T
- 63: Einschaltzeit Tₑ
- 64A: Ausschaltzeitdauer Tₐ
- 64B: Ausschaltzeitpunkt
- 65: Zündzeitpunkt t₀
- 66: R/C-Glied
- 67: Spannungsblock
- 68: erster Speicher
- 69: zweiter Speicher
- 70: dritter Speicher
- A, B: Spannungsmessstelle zwischen Schaltern 41, 42, 43, 44
- C, D: Spannungsmessstelle über Lastkreis
- f: Frequenz der Ausgangsspannung
- fₛ: Schaltfrequenz
- K, K': Ausgangsklemmen des Wechselrichters
- L1: Kompensationskondensator
- L2: Induktor
- L3: Wirkwiderstand
- N: errechneter Nulldurchgang
- M: tatsächlicher Nulldurchgang
- P1: Zeitpunkt
- P2: erster Ausschaltzeitpunkt
- P3: zweiter Ausschaltzeitpunkt
- T: Triggerzeitpunkt

## Patentansprüche

1. Verfahren zum Betreiben eines Umrichters (1), der insbesondere Wirkleistung für die induktive Erwärmung zur Verfügung stellt, an einem Lastkreis (5), insbesondere Lastschwingkreis, der eine Resonanzfrequenz hat und dessen Ausgangsfrequenz, insbesondere Ausgangsspannungsfrequenz, messbar (12A, 12B, 12C) ist, umfassend einen Wechselrichter (4), mit wenigstens zwei Schaltern (41, 42, 43, 44), die im Wechsel eingeschaltet werden (13, 45), **dadurch gekennzeichnet, dass** im Betriebspunkt eine Umrichterbelastung durch eine unterresonante Schaltfrequenz der Schalter (41, 42, 43, 44) in Übereinstimmung mit einer vorausberechneten Schaltfrequenz (fₛ) unter Berücksichtigung der Resonanzfrequenz am Lastkreis (5) reduziert wird, wobei sich die vorausberechnete Schaltfrequenz wahlweise aus der Häufigkeit des Einschaltens oder der Häufigkeit des Ausschaltens der wechselweise geschalteten Schalter (41, 42, 43, 44) berechnet.

2. Verfahren nach Anspruch 1, **dadurch gekennzeichnet, dass** der Betriebspunkt von einer zweiten Schaltfrequenz, vorzugsweise einer überresonanten Schaltfrequenz, startend angefahren wird, die oberhalb der unterresonanten Schaltfrequenz liegt, und schrittweise auf die unterresonante Schaltfrequenz des Betriebspunkts approximiert wird.

3. Verfahren nach Anspruch 1 oder 2, **dadurch gekennzeichnet, dass** durch die vorausberechnete Schaltfrequenz ein Ausgleich zwischen mehreren Umrichterbelastungen ermittelt wird, insbesondere von ohmschen Verlusten des Umrichters, von Schaltverlusten, vorzugsweise in den Schaltern des Wechselrichters, und eines Blindleistungsanteils, der der Wirkleistung des Umrichters zuordenbar ist.

4. Verfahren nach einem der Ansprüche 2 bis 3, **dadurch gekennzeichnet, dass** ein Austastwinkel, der sich aus der Differenz zwischen Ausschaltzeitpunkt abzüglich Einschaltzeitpunkt (63) in Relation zur Schaltfrequenz ergibt, beim Starten von der zweiten Schaltfrequenz geringer ist, als beim Erreichen der Schaltfrequenz des Betriebspunktes.

5. Verfahren nach einem der Ansprüche 1 bis 4, **dadurch gekennzeichnet, dass** der Betriebspunkt des Umrichters (1) in Abhängigkeit von einer weiteren Einflussgröße so vorausberechnet wird, dass die Betriebsfrequenz des Wechselrichters im Wesentlichen, insbesondere im eingeschwungenen Zustand, kleiner als die Resonanzfrequenz des Lastschwingkreises (5) ist.

6. Verfahren nach Anspruch 5, **dadurch gekennzeichnet, dass** die Einflussgröße insbesondere der Istwert der Ausgangsspannung (60) am Lastschwingkreis (5) oder auch die Höhe der Zwischenkreisspannung (18) und/oder die Höhe der Netzspannung (9) und/oder die Sollwerte der Ausgangsspannung bzw. Lastspannung (59) am Schwingkreis und/oder -strom und/oder -leistung und/oder die Güte des Lastkreises (5) ist.

7. Verfahren nach einem der Ansprüche 1 bis 6, **dadurch gekennzeichnet, dass** die Ausgangsleistung und/oder die Ausgangsspannung des Umrichters (1) im wesentlichen durch die Veränderung des Tastverhältnisses des Wechselrichters (4) geregelt wird, wobei das Tastverhältnis des Wechselrichters (4) vorausberechnet wird.

8. Umrichter (1), insbesondere zur Erzeugung von Wirkleistung für die induktive Erwärmung, umfassend einen Lastkreis (5), insbesondere einen Lastschwingkreis, und einen Wechselrichter (4), wobei der Wechselrichter (4) mindestens zwei im Wechsel eingeschaltete Schalter (41, 42, 43, 44) aufweist, wobei ein erster Speicher (68) für den Zeitpunkt des Schaltens des ersten Schalters (41, 42) und ein zweiter Speicher (69) für den Zeitpunkt des Schaltens des zweiten Schalters (43, 44) vorgesehen ist, **dadurch gekennzeichnet, dass** in einem dritten Speicher (70) ein einem erwarteten Nulldurchgang (N) entsprechender Zwischenwert, insbesondere die Zeitmitte, zwischen dem im ersten (68) und dem im zweiten Speicher (69) abgelegten Zeitpunkt abgelegt ist, dass ein Nulldurchgangskomparator für die Feststellung eines Nulldurchgangs (M) der Ausgangsspannung (60) vorgesehen ist und dass ein Vergleicher für den im dritten Speicher abgelegten Zwischenwert für den erwarteten Nulldurchgang (N) einerseits und den Zeitpunkt des tatsächlich festgestellten Nulldurchgangs (M) andererseits vorgesehen ist, wobei der Umrichter (1) bei einer Abweichung zwischen dem erwarteten Nulldurchgang (N) und dem tatsächlich festgestellten Nulldurchgang (M) durch eine schrittweise synchrone Anpassung der Schaltzeitpunkte des ersten und zweiten Schalters (41, 42, 43, 44) eine Belastungsverringerung, insbesondere eine Blindleistungsverringerung, des Umrichters einleitet.

9. Umrichter (1) nach Anspruch 8, **dadurch gekennzeichnet, dass** sich die aus den Schaltzeitpunkten (63) bestimmte Schaltfrequenz (fₛ) im eingeregelten Zustand in einer zur Resonanzfrequenz des Lastkreises (5) unterresonanten Frequenz befindet.

10. Umrichter (1) nach einem der Ansprüche 8 oder 9, **dadurch gekennzeichnet, dass** der im zweiten Speicher (69) enthaltene Zeitpunkt des Abschaltens des zweiten Schalters (43, 44) aus einer Berechnung des jeweils letzten, insbesondere alle Schalter (41, 42, 43, 44) umfassenden, Schaltvorgangs festgelegt ist.

11. Umrichter (1) nach einem der Ansprüche 8 oder 9, **dadurch gekennzeichnet, dass** der im ersten Speicher (68) enthaltene Zeitpunkt des Einschaltens des ersten Schalters (41, 42) aus einer Berechnung des jeweils letzten, insbesondere alle Schalter (41, 42, 43, 44) umfassenden, Schaltvorgangs (62) bestimmt ist.

12. Umrichter nach einem der Ansprüche 8 bis 11, **dadurch gekennzeichnet, dass** zum Lastschwingkreis (5) eine Resonanzdrossel (6) vorgesehen ist, die vorzugsweise in Parallelschaltung mit einem Glättungskondensator, insbesondere ein Widerstandskapazitätsglied (66), verschaltet ist.

13. Umrichter nach einem der Ansprüche 8 bis 12, **dadurch gekennzeichnet, dass** jeder Schalter (41, 42, 43, 44), der insbesondere ein Halbleiterschalter (48) wie ein IGBT, ein GTO oder ein Leistungs-MOSFET ist, mit einer antiparallelen Freilaufdiode (47) gegen Stromumkehr geschützt ist.

14. Verfahren zum Betreiben eines Umrichters (1), der insbesondere Wirkleistung für die induktive Erwärmung zur Verfügung stellt, an einem Lastkreis (5), insbesondere Lastschwingkreis, der eine Resonanzfrequenz hat und dessen Ausgangsfrequenz, insbesondere Ausgangsspannungsfrequenz, messbar (12A, 12B, 12C) ist, umfassend einen Wechselrichter (4), mit wenigstens zwei Schaltern (41, 42, 43, 44), die im Wechsel eingeschaltet werden (13, 45), **dadurch gekennzeichnet, dass** im Betriebspunkt eine Umrichterbelastung durch eine unterresonante Schaltfrequenz der Schalter (41, 42, 43, 44) in Übereinstimmung mit einer vorausberechneten Schaltfrequenz (fₛ) unter Berücksichtigung der Resonanzfrequenz am Lastkreis (5) reduziert wird, indem ein Nulldurchgang (M) der Ausgangsspannungsfrequenz gemessen und mit einem berechneten Nulldurchgang (N) verglichen wird, wobei bei einer Abweichung zwischen dem berechneten Nulldurchgang (N) und dem tatsächlich gemessenen Nulldurchgang (M) eine schrittweise synchrone Anpassung der Schaltzeitpunkte des ersten und zweiten Schalters (41, 42, 43, 44) eine Belastungsverringerung, insbesondere eine Blindleistungsverringerung, des Umrichters eingeleitet wird.

15. Verfahren nach Anspruch 14, **dadurch gekennzeichnet, dass** sich die vorausberechnete Schaltfrequenz wahlweise aus der Häufigkeit des Einschaltens oder der Häufigkeit des Ausschaltens der wechselweise geschalteten Schalter (41, 42, 43, 44) berechnet.

16. Verfahren nach einem der Ansprüche 14 oder 15, **dadurch gekennzeichnet, dass** der Betriebspunkt von einer zweiten Schaltfrequenz, vorzugsweise einer überresonanten Schaltfrequenz, startend angefahren wird, die oberhalb der unterresonanten Schaltfrequenz liegt, und schrittweise auf die unterresonante Schaltfrequenz des Betriebspunkts approximiert wird.

17. Verfahren nach einem der Ansprüche 14 bis 16, **dadurch gekennzeichnet, dass** durch die vorausberechnete Schaltfrequenz ein Ausgleich zwischen mehreren Umrichterbelastungen ermittelt wird, insbesondere von ohmschen Verlusten des Umrichters, von Schaltverlusten, vorzugsweise in den Schaltern des Wechselrichters, und eines Blindleistungsanteils, der der Wirkleistung des Umrichters zuordenbar ist.

18. Verfahren nach einem der Ansprüche 14 bis 17, **dadurch gekennzeichnet, dass** ein Austastwinkel, der sich aus der Differenz zwischen Ausschaltzeitpunkt abzüglich Einschaltzeitpunkt (63) in Relation zur Schaltfrequenz ergibt, beim Starten von der zweiten Schaltfrequenz geringer ist, als beim Erreichen der Schaltfrequenz des Betriebspunktes.

19. Verfahren nach einem der Ansprüche 14 bis 18, **dadurch gekennzeichnet, dass** der Betriebspunkt des Umrichters (1) in Abhängigkeit von einer weiteren Einflussgröße so vorausberechnet wird, dass die Betriebsfrequenz des Wechselrichters im Wesentlichen, insbesondere im eingeschwungenen Zustand, kleiner als die Resonanzfrequenz des Lastschwingkreises (5) ist.

20. Verfahren nach Anspruch 19, **dadurch gekennzeichnet, dass** die Einflussgröße insbesondere der Istwert der Ausgangsspannung (60) am Lastschwingkreis (5) oder auch die Höhe der Zwischenkreisspannung (18) und/oder die Höhe der Netzspannung (9) und/oder die Sollwerte der Ausgangsspannung bzw. Lastspannung (59) am Schwingkreis und/oder -strom und/oder -leistung und/oder die Güte des Lastkreises (5) ist.

21. Verfahren nach einem der Ansprüche 14 bis 20, **dadurch gekennzeichnet, dass** die Ausgangsleistung und/oder die Ausgangsspannung des Umrichters (1) im Wesentlichen durch die Veränderung des Tastverhältnisses des Wech selrichters (4) geregelt wird, wobei das Tastverhältnis des Wechselrichters (4) vorausberechnet wird.

## Claims

1. A method for operating a converter (1), more particularly one providing real power for inductive heating in a load circuit (5), more particularly a resonant load circuit that has a resonance frequency and the output frequency thereof, more particularly the output voltage frequency thereof, is measurable (12A, 12B, 12C), wherein said converter comprises an inverter (4) having at least two switches (41, 42, 43, 44) that are activated alternately (13, 45), **characterized in that** at the operating point a converter load is reduced by an under-resonant switching frequency of the switches ( 41, 42, 43, 44) in accordance with a precalculated switching frequency (fs) taking into account the resonance frequency in said load circuit (5), the precalculated switching frequency being calculated on the basis of either the switch-on frequency or the switch-off frequency of said alternately activated switches (41, 42, 43, 44).

2. The method as defined in claim 1, **characterized in that** the operating point is approached starting from a second switching frequency, preferably an over-resonant switching frequency, which is higher than the under-resonant switching frequency and is approximated stepwise to the under-resonant switching frequency at the operating point.

3. The method as defined in claim 1 or claim 2, **characterized in that** by means of the precalculated switching frequency, a balance between a plurality of converter loads is acquired, more particularly a balance of ohmic drops in the converter, of switching losses, preferably in the inverter switches, and of a proportion of the idling power that can be assigned to the converter's real power.

4. The method as defined in any one of claims 2 to 3, **characterized in that** a blanking angle resulting from the difference between the turn-off time and the turn-on time (63) in relation to the switching frequency is smaller when starting the second switching frequency than when reaching the switching frequency at the operating point.

5. The method as defined in any one of claims 1 to 4, **characterized in that** the operating point of said converter (1) is precalculated as a function of a further factor such that the operating frequency of the inverter, especially in the steady state thereof, is substantially lower than the resonance frequency of said resonant load circuit (5).

6. The method as defined in claim 5, **characterized in that** said factor is the actual value of the output voltage (60) of said resonant load circuit (5) or the level of the intermediate circuit voltage (18) and/or the level of the line voltage (9) and/or the set-point values of the output voltage or load voltage (59) at the resonant circuit and/or the output current and/or the output performance and/or the quality of said load circuit (5).

7. The method as defined in any one of claims 1 to 6, **characterized in that** the output power and /or the output voltage of said converter (1) is substantially regulated by changing the duty cycle of said inverter (4), the duty cycle of said inverter (4) being precalculated.

8. A converter (1), more particularly one for producing real power for inductive heating, comprising a load circuit (5), more particularly a resonant load circuit, and an inverter (4), which inverter (4) has at least two alternately actuated switches (41, 42, 43, 44), wherein a first memory (68) is provided for storing the time of switching of said first switch (41, 42) and a second memory (69) is provided for storing the time of switching of said second switch (43, 44), **characterized in that** an interim value corresponding to an expected zero crossing (N) is stored in a third memory (70), this interim value being in particular the mean time value of the time stored in the first memory (68) and the time stored in the second memory (69), further **characterized in that** a zero crossing comparator for determining a zero crossing (M) of the output voltage (60) is provided and that a comparator for comparing the interim value of said expected zero crossing stored in said third-memory on the one hand and the time of the actually detected zero crossing (M) on the other is provided, and in the case of a deviation of the expected zero crossing (N) from the actually detected zero crossing (M), said converter (1) initiates a load reduction, more particularly a reduction in the idling power of said converter by means of synchronous stepwise adjustment of the switching times of said first and second switches (41, 42, 43, 44).

9. The converter (1) as defined in claim 8, **characterized in that** the switching frequency (fₛ) defined by the switching times (63) is, in the regulated state, equal to an under-resonant frequency relative to the resonance frequency of said load circuit (5)

10. The converter (1) as defined in claim 8 or claim 9, **characterized in that** the time of switching off the second switch (43,44) as stored in the second memory (69) is determined by computation of the most recent switching operation involving, in particular, all switches (41, 42, 43, 44).

11. The converter (1) as defined in claim 8 or claim 9, **characterized in that** the time of switching on said first switch (41,42) as stored in said first memory (68) is determined by computation of the most recent switching operation (62) involving, in particular, all switches (41, 42, 43, 44).

12. The converter as defined in any one of claims 8 to 11, **characterized in that** a resonant inductor (6) is provided in addition to said resonant load circuit (5), this resonant inductor (6) preferably being connected in parallel with a smoothing capacitor, more particularly a capacity resistance element (66).

13. The converter as defined in any one of claims 8 to 12, **characterized in that** each switch (41, 42, 43, 44), which is in particular a semiconductor switch (48) such as an IGBT, a GTO, or a power MOSFET, is protected from current reversal with an antiparallel free-wheeling diode (47).

14. A method for operating a converter (1), more particularly one which provides real power for inductive heating in a load circuit (5), more particularly a resonant load circuit that has a resonance frequency and of which the output frequency, more particularly the output voltage frequency, is measurable (12A, 12B, 12C), wherein said converter comprises an inverter (4), including at least two switches (41, 42, 43, 44) that are activated alternately (13, 45), **characterized in that** at the operating point a converter load is reduced by an under-resonant switching frequency of the switches ( 41, 42, 43, 44) in accordance with a precalculated switching frequency (fₛ) taking into account the resonance frequency in said load circuit (5), by measuring a zero crossing of the output voltage frequency (M), this zero crossing being compared with a calculated zero crossing (N), and in the case of a deviation of the calculated zero crossing (N) from the actually measured zero crossing (M), a load reduction, especially a reduction in the idling power, is initiated by means of a synchronous stepwise adjustment of the switching times of said first and second switches (41, 42, 43, 44).

15. The method as defined in claim 14, **characterized in that** the precalculated switching frequency is calculated on the basis of either the switch-on frequency or the switch-off frequency of said alternately activated switches (41, 42, 43, 44).

16. The method as defined in claim 14 or claim 15, **characterized in that** the operating point is approached by a second switching frequency, preferably an over-resonant switching frequency, which is higher than the under-resonant switching frequency and which is approximated stepwise to the under-resonant switching frequency at the operating point.

17. The method as defined in any one of claims 14 to 16, **characterized in that** a balance between a plurality of converter loads is determined by means of the precalculated switching frequency, in particular a balance of ohmic drops in the converter, of switching losses, preferably in the inverter switches, and a proportion of the idling power that can be assigned to the converter's real power.

18. The method as defined in any one of claims 14 to 17, **characterized in that** a blanking angle resulting from the difference between the turn-off time and the turn-on time (63) in relation to the switching frequency is smaller when starting the second switching frequency than when reaching the switching frequency at the operating point.

19. The method as defined in any one of claims 14 to 18, **characterized in that** the operating point of the converter (1) is precalculated as a function of a further factor such that the converter's operating frequency, especially in the steady state, is substantially lower than the resonance frequency of said resonant load circuit (5).

20. The method as defined in claim 19, **characterized in that** said factor is the actual value of the output voltage (60) of said resonant load circuit (5) or the level of the intermediate circuit voltage (18) and/or the level of the line voltage (9) and/or the set-point values of the output voltage or load voltage (59) at the resonant circuit and/or the output current and/or the output performance and/or the quality of said load circuit (5).

21. The method as defined in any one of claims 14 to 20, **characterized in that** the output power and /or the output voltage of said converter (1) is substantially regulated by changing the duty cycle of said inverter (4), the duty cycle of said inverter (4) being precalculated.

## Revendications

1. Procédé pour faire fonctionner un convertisseur (1), qui met à disposition en particulier de la puissance active pour le réchauffement inductif, sur un circuit de charge (5), en particulier un circuit oscillant de charge qui a une fréquence de résonance et dont la fréquence de sortie, en particulier la fréquence de tension de sortie, est mesurable (12A, 12B, 12C), comprenant un onduleur (4), avec au moins deux interrupteurs (41, 42, 43, 44), qui sont actionnés en alternance (13, 45), **caractérisé en ce que**, au point de fonctionnement, une charge du convertisseur est réduite par une fréquence de commutation sous-résonante des interrupteurs (41, 42, 43, 44) en concordance avec une fréquence de commutation (fₛ) calculée à l'avance avec prise en compte de la fréquence de résonance sur le circuit de charge (5), la fréquence de commutation calculée à l'avance se calculant au choix à partir de la fréquence d'enclenchement ou de la fréquence de coupure des interrupteurs (41, 42, 43, 44) commutés alternativement.

2. Procédé selon la revendication 1, **caractérisé en ce que** le point de fonctionnement est atteint au démarrage par une seconde fréquence de commutation, de préférence une fréquence de commutation sur-résonante, qui se situe au-dessus de la fréquence de commutation sous-résonante, et est approchée progressivement jusqu'à la fréquence de commutation sous-résonante du point de fonctionnement.

3. Procédé selon la revendication 1 ou 2, **caractérisé en ce qu'**un équilibre entre plusieurs charges de convertisseur est déterminé par la fréquence de commutation calculée à l'avance, en particulier de pertes ohmiques du convertisseur, de pertes de commutation, de préférence dans les interrupteurs de l'onduleur, et d'une partie de puissance réactive, qui peut être attribuée à la puissance active du convertisseur.

4. Procédé selon l'une quelconque des revendications 2 à 3, **caractérisé en ce qu'**un angle de suppression, qui est obtenu à partir de la distance entre le point de déconnexion moins le point d'enclenchement (63) par rapport à la fréquence de commutation, est plus faible lors du démarrage à partir de la seconde fréquence de commutation que lorsqu'on atteint la fréquence de commutation du point de fonctionnement.

5. Procédé selon l'une quelconque des revendications 1 à 4, **caractérisé en ce que** le point de fonctionnement du convertisseur (1) est calculé à l'avance en fonction d'une autre valeur d'influence de telle sorte que la fréquence de service de l'onduleur est sensiblement, en particulier dans l'état permanent, inférieure à la fréquence de résonance du circuit oscillant de charge (5).

6. Procédé selon la revendication 5, **caractérisé en ce que** la valeur d'influence est en particulier la valeur réelle de la tension de sortie (60) sur le circuit oscillant de charge (5) ou également le niveau de la tension du circuit intermédiaire (18) et/ou le niveau de la tension du réseau (9) et/ou les valeurs théoriques de la tension de sortie et/ou de la tension de charge (59) sur le circuit oscillant et/ou le courant oscillant et/ou la puissance oscillante et/ou la qualité du circuit de charge (5).

7. Procédé selon l'une quelconque des revendications 1 à 6, **caractérisé en ce que** la puissance de sortie et/ou la tension de sortie du convertisseur (1) est réglée essentiellement par la variation du taux d'impulsion de l'onduleur (4), le taux d'impulsions de l'onduleur (4) étant calculé à l'avance.

8. Convertisseur (1), en particulier pour générer de la puissance active pour le réchauffement inductif, comprenant un circuit de charge (5), en particulier un circuit oscillant de charge, et un onduleur (4), l'onduleur (4) présentant au moins deux interrupteurs (41, 42, 43, 44) enclenchés alternativement, une première mémoire (68) étant prévue pour le moment de la connexion du premier interrupteur (41, 42) et une seconde mémoire (69) pour le moment de la connexion du second interrupteur (43, 44), **caractérisé en ce qu'**une valeur intermédiaire, correspondant à un passage par zéro (N) attendu, en particulier la moyenne de temps, est déposée dans une troisième mémoire (70) entre le moment déposé dans la première mémoire (68) et le moment déposé dans la seconde mémoire (69), **en ce qu'**un comparateur de passage par zéro est prévu pour la détermination d'un passage par zéro (M) de la tension de sortie (60) et **en ce qu'**un comparateur est prévu pour la valeur intermédiaire déposée dans la troisième mémoire pour le passage par zéro (N) attendu d'une part et le moment du passage par zéro (M) constaté réellement d'autre part, le convertisseur (1) amorçant une réduction de charge, en particulier une réduction de puissance réactive, du convertisseur dans le cas d'un écart entre le passage par zéro (N) attendu et le passage par zéro (M) réellement constaté par une adaptation asynchrone progressive des moments de commutation du premier et du second interrupteurs (41, 42, 43, 44).

9. Convertisseur (1) selon la revendication 8, **caractérisé en ce que** la fréquence de commutation (fₛ) déterminée à partir des moments de commutation (63) se trouve, dans l'état réglé dans une fréquence sous-résonante par rapport à la fréquence de résonance du circuit de charge (5).

10. Convertisseur (1) selon l'une quelconque des revendications 8 ou 9, **caractérisé en ce que** le moment, contenu dans la seconde mémoire (69), de la déconnexion du second interrupteur (43, 44) est défini à partir d'un calcul de la dernière opération de commutation respective, comprenant en particulier tous les interrupteurs (41, 42, 43, 44).

11. Convertisseur (1) selon l'une quelconque des revendications 8 ou 9, **caractérisé en ce que** le moment, contenu dans la première mémoire (68), de l'enclenchement du premier interrupteur (41, 42) est déterminé à partir d'un calcul de la dernière opération de commutation (62) respective, comprenant en particulier tous les interrupteurs (41, 42, 43, 44).

12. Convertisseur selon l'une quelconque des revendications 8 à 11, **caractérisé en ce qu'**une self de résonance (6) est prévue pour le circuit oscillant de charge (5), lequel self est câblé de préférence dans un montage en parallèle avec un condensateur de filtrage, en particulier un élément à capacité de résistance (66).

13. Convertisseur selon l'une quelconque des revendications 8 à 12, **caractérisé en ce que** chaque interrupteur (41, 42, 43, 44), qui est en particulier un commutateur statique (48) tel qu'un IGBT, un GTO ou un MOSFET de puissance, est protégé avec une diode de marche à vide (47) antiparallèle contre l'inversion du courant.

14. Procédé pour faire fonctionner un convertisseur (1), qui met à disposition en particulier de la puissance active pour le réchauffement inductif, sur un circuit de charge (5), en particulier un circuit oscillant de charge, qui a une fréquence de résonance et dont la fréquence de sortie, en particulier la tension de sortie, est mesurable (12A, 12B, 12C), comprenant un onduleur (4), avec au moins deux interrupteurs (41, 42, 43, 44), qui sont enclenchés en alternance (13, 45), **caractérisé en ce que**, au point de service, une charge de convertisseur est réduite par une fréquence de commutation sous-résonante des interrupteurs (41, 42, 43, 44) en concordance avec une fréquence de commutation (fₛ) calculée à l'avance avec prise en compte de la fréquence de résonance sur le circuit de charge (5) en mesurant un passage par zéro (M) de la fréquence de tension de sortie, et en le comparant avec un passage par zéro (N) calculé, une adaptation synchrone progressive des moments de commutation du premier et du second interrupteurs (41, 42, 43, 44) amorçant une réduction de charge, en particulier une réduction de la puissance réactive, du convertisseur dans le cas d'un écart entre le passage par zéro (N) calculé et le passage par zéro (M) réellement mesuré.

15. Procédé selon la revendication 14, **caractérisé en ce que** la fréquence de commutation calculée à l'avance se calcule au choix à partir de la fréquence de commutation ou de la fréquence de déconnexion des interrupteurs (41, 42, 43, 44) commutés en alternance.

16. Procédé selon l'une quelconque des revendications 14 ou 15, **caractérisé en ce que** le point de service est atteint en démarrant par une seconde fréquence de commutation, de préférence une fréquence de commutation sur-résonante, qui se situe au-dessus de la fréquence de commutation sous-résonante, et est approché progressivement jusqu'à la fréquence de commutation sous-résonante du point de service.

17. Procédé selon l'une quelconque des revendications 14 à 16, **caractérisé en ce qu'**un équilibre entre plusieurs charges de convertisseur est déterminé par la fréquence de commutation calculée à l'avance, en particulier de pertes ohmiques du convertisseur, de pertes de commutation, de préférence dans les interrupteurs de l'onduleur, et d'une fraction de puissance réactive, qui peut être attribuée à la puissance active du convertisseur.

18. Procédé selon l'une quelconque des revendications 14 à 17, **caractérisé en ce qu'**un angle de suppression, qui se déduit de la différence entre le moment de déconnexion moins le temps de connexion (63) par rapport à la fréquence de commutation, est plus faible lors du démarrage à partir de la seconde fréquence de commutation que lorsqu'on atteint la fréquence de commutation du point de fonctionnement.

19. Procédé selon l'une quelconque des revendications 14 à 18, **caractérisé en ce que** le point de fonctionnement du convertisseur (1) est calculé à l'avance en fonction d'une autre valeur d'influence de sorte que la fréquence de fonctionnement de l'onduleur est sensiblement, en particulier dans l'état permanent, inférieure à la fréquence de résonance du circuit oscillant de charge (5).

20. Procédé selon la revendication 19 **caractérisé en ce que** la grandeur d'influence est en particulier la valeur réelle de la tension de sortie (60) sur le circuit oscillant de charge (5) ou également le niveau de la tension du circuit intermédiaire (18) et /ou le niveau de la tension de réseau (9) et/ou les valeurs de consigne de la tension de sortie ou de la tension de charge (59) sur le circuit oscillant et/ou le courant oscillant et/ou la puissance oscillante et/ou la qualité du circuit de charge (5).

21. Procédé selon l'une quelconque des revendications 14 à 20, **caractérisé en ce que** la puissance de sortie et/ou la tension de sortie du convertisseur (1) est réglée essentiellement par la variation du taux d'impulsions du convertisseur (4), le taux d'impulsions du convertisseur (4) étant calculé à l'avance.
